# EUROPÄISCHE PATENTSCHRIFT

(11) **EP 0 848 311 B1**
(45) Veröffentlichungstag und Bekanntmachung des Hinweises auf die Patenterteilung: **13.02.2002**
(21) Anmeldenummer: 97120713.9
(22) Anmeldetag: 26.11.1997
(51) Int. Cl.: G05D 23/02

(54) **Verstelleinrichtung**
Actuating device
Dispositif d'actionnement

(30) Priorität: 11.12.1996 DE 19651480
(43) Veröffentlichungstag der Anmeldung: 17.06.1998
(73) Patentinhaber: H KRANTZ-TKT GmbH, 51465 Bergisch Gladbach (DE)
(72) Erfinder: Makulla, Detlef, Dipl.-Ing., 51491 Overath (DE); Schulz, Peter, Dipl.-Ing., 51429 Bergisch Gladbach (DE)
(74) Vertreter: Bauer, Dirk, Dipl.-Ing. Dipl.-Kfm.

(56) Entgegenhaltungen:
- GB-A- 2 133 870
- US-A- 4 509 678
- PATENT ABSTRACTS OF JAPAN vol. 9, no. 275 (M-426), 2.November 1985 & JP 60 119319 A (NIHON THERMOSTAT KK), 26.Juni 1985,
- PATENT ABSTRACTS OF JAPAN vol. 14, no. 159 (M-0956), 28.März 1990 & JP 02 021169 A (RANCO JAPAN LTD), 24.Januar 1990,

## Beschreibung

Die Erfindung betrifft eine Verstelleinrichtung zum Verändern des Querschnittes eines Fluiddurchlasses und/oder der Richtung eines Fluidstromes in Abhängigkeit von der Temperaturdifferenz zwischen einem ersten Fluid und einem zweiten Fluid, welche aus demselben Stoff oder jeweils aus einem anderen Stoff oder Stoffgemisch bestehen, wobei die Verstelleinrichtung einen ersten vom ersten Fluid beaufschlagten Dehnstoffantrieb und einen zweiten vom zweiten Fluid beaufschlagten Dehnstoffantrieb aufweist, die beide in Wirkverbindung mit einem gemeinsamen Verstellelement stehen, das durch die in entgegengesetzte Richtungen wirkenden Dehnstoffantriebe verstellbar und des weiteren mit einem Mittel zum Verändern des Querschnitts des Fluiddurchlasses und/oder der Richtung des Fluidstromes verbindbar ist.

Derartige Verstelleinrichtungen sind allgemein bekannt und werden unter anderem bei lufttechnischen Bauteilen, wie z. B. Luftdurchlässen, Steuer- und Regelklappen und Volumenstromreglern eingesetzt. Häufig tritt im Bereich der technischen Gebäudeausrüstung der Fall auf, daß eine Verstellung an einem lufttechnischen Bauteil, wie z. B. einem Luftdurchlaß oder Volumenstromregler in Abhängigkeit einerseits von der Temperatur der durch den Durchlaß zugeführten Luft und andererseits von der Temperatur in einem Raum, in welchen die Luft aus dem Luftdurchlaß einströmt, vorgenommen werden muß. Eine geeignete Stellgröße für die Verstellung der Verstelleinrichtung ist oftmals die Differenz zwischen den beiden vorgenannten Temperaturen. Im Vergleich zu den Absolutwerten der beiden vorgenannten Temperaturen ist deren Differenz die für die Raumklimatisierung wesentlich bedeutsamere Größe, da sie darüber Auskunft gibt, ob der Raum durch die zugeführte Zuluft beheizt oder gekühlt wird. Bei einer positiven Differenz zwischen der Zulufttemperatur und der Raumlufttemperatur spricht man vom sog. Heizfall, während bei einer negativen Differenz der sog. Kühlfall vorliegt.

Sowohl bei Deckendrallauslässen als auch bei bodennah angeordneten Quelluftauslässen muß die Strömungsaustrittsrichtung der zugeführten Luft in Abhängigkeit von deren Über- bzw. Untertemperatur verändert werden, um den heutigen Komfortansprüchen gerecht zu werden und eine energetisch effektive Klimatisierung des Raumes zu erzielen. So muß beispielsweise bei Deckendrallauslässen zur Vermeidung von Zugerscheinungen gekühlte Zuluft horizontal, geheizte Zuluft zur schnellen Aufheizung jedoch vertikal nach unten ausgeblasen werden. Demgegenüber ist es beispielsweise bei Quelluftauslässen erforderlich, gekühlte Zuluft schräg nach oben aus dem Auslaß austreten zu lassen, damit diese anschließend in einiger Entfernung

des Auslasses wieder zu Boden sinkt. Auf diese Weise können ohne hohe Austrittsgeschwindigkeiten große Reichweiten bei der Versorgung mit Zuluft erzielt werden. Soll jedoch geheizte Zuluft aus einem Quelluftauslaß abgegeben werden, so ist diese schräg nach unten auf den Fußboden zu richten, um zum einen dessen große Speichermasse zu erwärmen und zum anderen ein sofortiges Aufsteigen der Warmluft zur Raumdecke zu verhindern, da hierdurch der Heizeffekt zum größten Teil verloren wäre.

Allgemein bekannte Verstelleinrichtungen sind in der Regel mit zwei elektrischen oder elektronischen Temperaturfühlern ausgestattet, die einerseits die Raumlufttemperatur und andererseits die Zulufttemperatur messen. In Abhängigkeit von der jeweiligen Temperaturdifferenz wird mittels eines meist elektromotorischen, seltener eines hydraulischen oder pneumatischen Antriebs entweder ein Volumenstromregler angesteuert oder ein Stellglied zur Veränderung der Strömungsaustrittsrichtung betätigt. Die bekannten Verstelleinrichtungen sind kompliziert und teuer, da zum einen ein Regelgerät sowie viele Bauteile und eine aufwendige Verkabelung und zum anderen Hilfsenergie zur Durchführung der Verstellung erforderlich sind.

Ferner sind noch Verstelleinrichtungen bekannt, die keine zusätzliche Hilfsenergie benötigen, bei denen aber die Verstellung des Verstellgliedes allein in Abhängigkeit von der gemessenen Zulufttemperatur erfolgt. Die Verstelleinrichtung wird hierbei mit Hilfe eines sogenannten Dehnstoffantriebs betätigt, der im Zuluftvolumenstrom angeordnet ist. Es wird also nur die Zulufttemperatur und nicht die Differenz zwischen der Zuluft- und der Raumlufttemperatur zur Verstellung herangezogen. Der Nachteil des vorbeschriebenen Verstellprinzips liegt darin, daß ein und dieselbe Zulufttemperatur sowohl beim Heizfall als auch beim Kühlfall auftreten kann. Wird im vorgenannten Fall beispielsweise eine Zulufttemperatur von 22 °C mit dem Heizfall gleichgesetzt, so wird das Verstellglied eines Deckendrallauslasses so einzustellen sein, daß die Zuluft senkrecht nach unten in den Raum eingeblasen wird, in dem beispielsweise eine Temperatur von 18 °C herrscht.

Beträgt die Raumlufttemperatur beispielsweise im Sommer jedoch bereits 25 °C, so liegt trotz derselben Zulufttemperatur von 22 °C kein Heizfall, sondern ein Kühlfall vor. Ist die Verstellung der Strömungsaustrittsrichtung jedoch nur von der Zulufttemperatur abhängig, so wird auch im nunmehr vorliegenden Kühlfall die unterkühlte Zuluft senkrecht nach unten ausgeblasen. Dies führt jedoch zum einen zu Zugerscheinungen in Bereichen unterhalb des Dekkendralldurchlasses und zum anderen zu einer sehr ungleichförmigen Temperaturverteilung mit örtlichen Temperaturspitzen im Bereich der Decke. Eigentlich erforderlich ist in diesem Fall der im wesentlichen horizontale Austritt der unterkühlten Zuluft entlang der Decke, um ein gleichmäßiges, über den Raumquerschnitt verteiltes Absinken der Zuluft zu erzielen. Mit einer nur von der Zulufttemperatur abhängigen Verstellung läßt sich dies jedoch nicht erreichen.

Aus der GB 2 133 870 A und der US 4,509,678 sind jeweils Verstelleinrichtungen bekannt, bei denen zwischen den Kolbenstangen der Dehnstoffantriebe und dem jeweiligen Übertragungselement an den Verstellelementen starre Verbindungen vorhanden sind. Gleichfalls vorhandene Federelemente dienen allein dazu, das Verstellelement im Falle eines Zurückziehens der Kolbenstange der Dehnstoffantriebe zurückzuholen oder eine Vorspannung auf die beiden Hebelelemente einer Doppelhebeleinheit auszuüben, um diese in eine gestreckte Stellung zu überführen. Aus der GB 2 133 870 A ist des weiteren eine Balkenkonstruktion bekannt, deren Drehachse von einer Welle gebildet wird. Auf diese Welle wirkt über einen starr damit verbundenen Bügel lediglich das Moment eines einziges Dehnstoffantriebs, wohingegen die weiteren Dehnstoffantriebe starr mit der Welle über Flügel verbunden sind und somit insgesamt der Rotation der Welle folgen. Die weiteren Dehnstoffantriebe bewegen sich somit relativ zu einem bereits durch den ersten Dehnstoffantrieb bewegten Bezugssystem, wodurch eine Addition bzw. Subtraktion der einzelnen Verstellwege erfolgen kann. Die Messung von Differenztemperaturen ist im Falle der bekannten Verstelleinrichtung somit nicht möglich.

Der Erfindung liegt die Aufgabe zugrunde, eine selbsttätig und ohne externe Hilfsenergie, wie zum Beispiel Strom, Druckluft etc., arbeitende Verstelleinrichtung zu schaffen, mittels derer aufgrund einer Temperaturdifferenz zwischen zwei Fluiden eine Stellbewegung erzeugbar ist.

Ausgehend von einer Verstelleinrichtung der eingangs beschriebenen Art wird diese Aufgabe erfindungsgemäß dadurch gelöst, daß das Verstellelement linear verschiebbar ist, wobei beidseitig des Verstellelements jeweils zwischen diesem und einem parallel zu dem Verstellelement verschiebbaren Kolben des jeweils zugeordneten Dehnstoffantriebs je ein in Bewegungsrichtung des Verstellelements und des Kolbens verkürzbares Federelement angeordnet ist.

Dadurch, daß die Energie zur Verstellung direkt aus den beiden Fluiden entnommen wird, kann auf die Versorgung der erfindungsgemäßen Verstelleinrichtung mit jeglicher externer Hilfsenergie verzichtet werden. Die Verstelleinrichtung gemäß der Erfindung basiert dabei auf einem rein mechanischen Funktionsprinzip und besitzt daher keine störungsempfindliche Elektronik und benötigt keinerlei Verkabelung.

Die an sich bekannten Dehnstoffantriebe bestehen aus einem mit einer speziellen Wachsmischung gefüllten Zylinder, der einseitig fest und auf der anderen Seite mit einem verschiebbaren Kolben verschlossen ist. Im stationären Betrieb nimmt dabei die im Dehnstoffantrieb enthaltene Wachsmischung die Temperatur des Fluids an, von dem er beaufschlagt wird. Dabei ist das von der definierten Menge der Wachsmischung eingenommene Volumen eine bestimmte Funktion der Temperatur, wobei eine Temperatursteigerung mit einer Volumenzunahme einhergeht. Eine solche Volumenzunahme bewirkt eine Verschiebung des Kolbens, dessen Bewegung über eine Kolbenstange nach außen übertragen wird. Es ist allgemein bekannt, die verwendete Wachsmischung auf verschiedene Temperaturarbeitsbereiche einzustellen.

Dadurch, daß sich jeweils ein Dehnstoffantrieb in einem der beiden Fluide befindet, wird die zwischen diesen bestehende Differenztemperatur erfaßt und somit eine von den jeweiligen Absoluttemperaturen unabhängige bedarfsgerechte Verstellung des Strömungsquerschnittes bzw. der Strömungsaustrittsrichtung erzielt. Die Differenzmessung wird dabei dadurch erzielt, daß die Dehnstoffantriebe in entgegengesetzter Richtung auf das gemeinsame Verstellelement einwirken. Ein gleichförmiges Ansteigen beider Fluidtemperaturen führt demgemäß - wie auch gewünscht - zu keiner veränderten Position des Verstellelements. Dabei verhindern die Federelemente, daß bei entgegengesetzter Kraftrichtung der Dehnstoffantrieb eine Beschädigung oder Zerstörung der Verstelleinrichtung eintritt.

Das Verstellelement ist dann in Ruhe, d.h. erfährt keine Verlagerung, wenn die auf es wirkenden Kräfte im Gleichgewicht sind. Diese Kräfte sind jeweils die Federkräfte der beidseitig angreifenden Federelemente. Besitzen beide Federelemente dieselbe Federkonstante, so sind sie - ein lineares Kraft-Weg-Gesetz vorausgesetzt - stets um denselben Betrag verkürzt. Das Verstellelement befindet sich daher stets in der Mitte zwischen denjenigen Enden der Federelemente, die ihm abgewandt sind, und - bei identischer Länge der jeweils verwendeten Kolbenstangen-Zwischenelemente - auch mittig zwischen den beiden Kolben der Dehnstoffantriebe.

Findet ausgehend von einem Gleichgewichtszustand ein gleichmäßiges Ansteigen der Temperaturen beider Dehnstoffantriebe statt, so werden beide Federelemente um den gleichen Betrag verkürzt, ohne daß sich an der Position des Verstellelements etwas ändert. Dies zeigt die Abhängigkeit der Position des Verstellelements von der jeweiligen Differenztemperatur und nicht von den Absoluttemperaturen.

Ändert sich ausgehend von einem Gleichgewichtszustand nur die Temperatur eines Fluids, d.h. nur eines Dehnstoffantriebs, so findet eine Verschiebung dessen Kolbens statt. Das Verstellelement verschiebt sich infolgedessen jedoch nur um den halben Betrag der Verschiebung des Kolbens des Dehnstoffantriebs, da bei beiden Federelementen eine Längenveränderung um den gleichen Betrag stattfindet. Eine Änderung nur einer Temperatur, d.h. eine Veränderung der Differenztemperatur, hat somit wie gewünscht eine Verschiebung des Verstellelements zur Folge.

Die Erfindung ausgestaltend ist vorgesehen, daß die Federelemente und das Verstellelement in einem gemeinsamen Rohr verschiebbar sind, das im Verstellbereich des Verstellelements mit einem Langloch zur Durchführung eines fest mit dem Verstellelement verbundenen Mitnehmers versehen ist.

Das Rohr verhindert zum einem ein unerwünschtes Ausweichen der Federelemente und des Verstellelementes quer zu deren Bewegungsrichtung und bietet zum anderen einen Schutz der gesamten Verstellmechanik vor Verschmutzungen jeglicher Art.

Eine andere Ausgestaltung der Verstelleinrichtung besteht darin, daß das einen Balken bildende Verstellelement drehbeweglich gelagert ist, wobei mittels der Dehnstoffantriebe jeweils über in Bewegungsrichtung ihrer Kolben verkürzbare Federelemente in bezug auf die Drehachse des Balken Momente unterschiedlichen Vorzeichens in den Balken einleitbar sind.

Eine solche Verstelleinrichtung basiert auf dem Prinzip einer sogenannten Drehmomentenwaage, bei der der Balken dann in Ruhe ist, wenn ein Momentengleichgewicht herrscht, d.h. wenn die Summe aller eingeleiteten Momente gleich Null ist.

Sind gleich starke Einflüsse der Temperaturen beider Fluide gewünscht, so ist es vorteilhaft, das Produkt aus der Federkonstanten und dem Abstand des Krafteinleitungspunktes von der Drehachse des Balkens bei beiden Dehnstoffantrieben identisch zu wählen. In diesem Fall bewirken gleichgerichtete und betragsmäßig gleiche Temperaturveränderungen in beiden Fluiden, d.h. gleichgerichtete und betragsmäßig gleiche Verschiebungen der Kolben der zugeordneten Dehnstoffantriebe, eine betragsmäßig gleiche Momentendifferenz, so daß der Gleichgewichtszustand unverändert erhalten bleibt. Ändert sich demgegenüber nur eine Fluidtemperatur, so wird der am Balken aus seiner zuvor eingenommen Lage ausgelenkt, wobei beide Federelemente in ihrer Länge um denselben Betrag verkürzt bzw. verlängert werden. Auch bei dieser Ausgestaltung der erfindungsgemäßen Verstelleinrichtung ist folglich allein die Temperaturdifferenz maßgeblich für die Stellgröße.

Eine Weiterbildung der Erfindung besteht darin, daß die die Momente verursachenden Kräfte der Federelemente, die durch die Dehnstoffantriebe in ihrer Länge veränderbar sind, in bezug auf die Drehachse an gegenüberliegenden Seiten der Balken angreifen.

Auf diese Weise kann ein ausreichender Abstand zwischen den in verschiedenen Fluiden anzuordnenden Dehnstoffantrieben erzielt und die Ausbildung einer zwischen ihnen vorzusehenden Trennwand erleichtert werden.

Ferner ist es besonders vorteilhaft, daß die Verstelleinrichtung derart in eine angepaßte Aussparung in einer Wandung eines Durchlasses einsetzbar ist, daß sich der erste Dehnstoffantrieb im Inneren des Durchlasses im Strömungsbereich des ersten Fluids und der zweite Dehnstoffantrieb außerhalb des Durchlasses in dem zweiten Fluid befindet.

Um eine Verfälschung der Temperaturmessung an dem zweiten Dehnstoffantrieb durch das aus dem Durchlaß austretende erste Fluid zu vermeiden, wird vorgeschlagen, daß der zweite Dehnstoffantrieb mittels einer Abdeckhaube von dem aus dem Durchlaß austretenden ersten Fluid abschirmbar ist. Auf diese Weise wird stets die reale Temperatur außerhalb des Durchlasses gemessen.

Schließlich ist gemäß der Erfindung noch vorgesehen, daß der zweite Dehnstoffantrieb von dem zweiten Fluid umströmbar ist, wozu letzteres aus der Umgebung des Durchlasses durch einen Sekundärfluideinlaß mit Hilfe der Strömung des ersten Fluids im Inneren des Durchlasses in diesen ansaugbar ist.

Der Wärmeaustausch zwischen dem zweiten Fluid und dem zweiten Dehnstoffantrieb wird auf diese Weise deutlich erhöht, wodurch die Ansprechzeit der Regeleinrichtung verkürzt werden kann.

Die Erfindung wird nachfolgend anhand mehrerer Ausführungsbeispiele einer Verstelleinrichtung, die in der Zeichnung dargestellt sind, näher erläutert. Es zeigt:
- Figur 1: einen Längsschnitt durch eine Verstelleinrichtung mit linearer Verschiebung des Verstellelements;
- Figur 2: die Anordnung der Verstelleinrichtung gemäß Figur 1 in einem Verdrängungsluftdurchlaß im Heizfall;
- Figur 3: wie Figur 2, jedoch im Kühlfall und
- Figur 4: eine alternative Anordnung der Verstelleinrichtung in einem Verdrängungsluftdurchlaß.

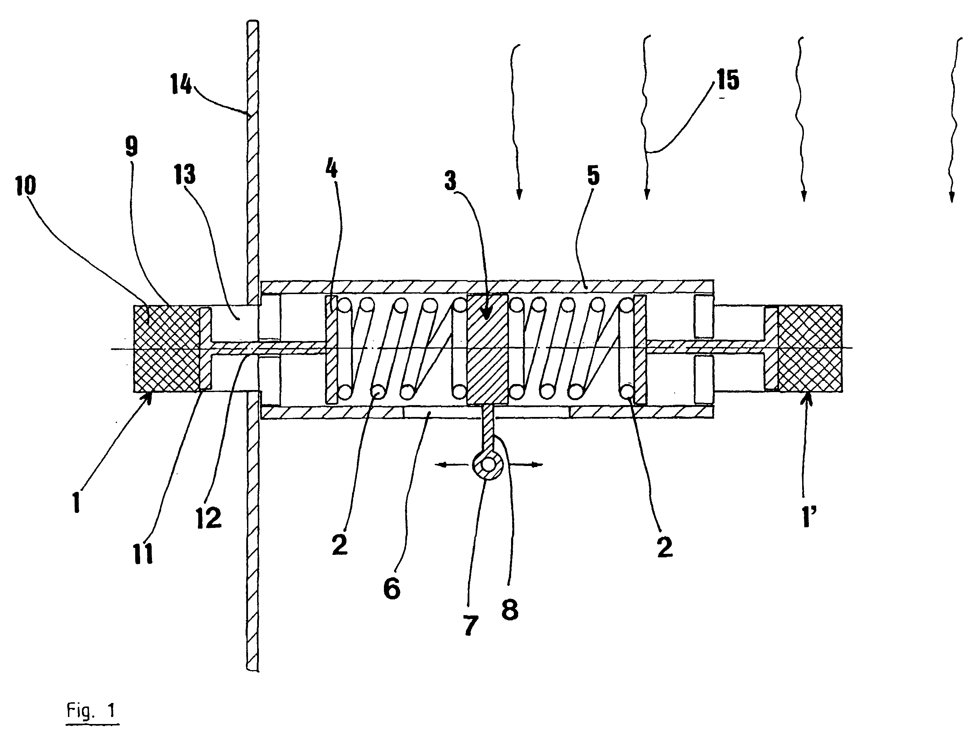

Die in Figur 1 gezeigt Verstelleinrichtung besteht aus zwei identischen Dehnstoffantrieben 1 und 1', zwei ebenfalls identischen Federelementen 2 sowie einem zwischen den beiden Federelementen 2 angeordneten Verstellelement 3. Die Dehnstoffantriebe 1 und 1', die Federelemente 2 und das Verstellelement 3 sind koaxial zueinander ausgerichtet, wobei die Federelemente 2 und das Verstellelement 3 sowie zwei Stützplatten 4 verschiebbar in einem zylindrischen Rohr 5 gelagert sind. Das Rohr 5 weist auf einer Seite ein Langloch 6 zur Durchführung eines fest mit dem Verstellelement 3 verbundenen und mit einer Öse 7 versehenen Mitnehmers 8 auf.

Die Dehnstoffantriebe 1 und 1' bestehen jeweils aus einem einseitig fest verschlossenen und auf der gegenüberliegenden Seite offenen Zylinder 9, dessen Innenraum zu einem gewissen Anteil mit einer speziellen Wachsmischung gefüllt ist, die ein besonderes TemperaturAusdehnungs-Verhalten zeigt. Die Wachsmischung 10 wird zu der offenen Seite des Zylinders 9 hin von einem Kolben 11 begrenzt, der über eine Kolbenstange 12 fest mit der Stützplatte 4 verbunden ist.

Die dargestellte Verstelleinrichtung ist derartig in eine angepaßte Aussparung 13 in einer Wandung 14 eines nicht näher dargestellten, aber bekannten Durchlasses eingesetzt, daß sich der rechte Dehnstoffantrieb 1' im Inneren des Durchlasses im durch Pfeile 15 angedeuteten Strömungsbereich eines ersten Fluids und der linke Dehnstoffantrieb 1 außerhalb des Durchlasses in einem zweiten Fluid befindet.

Steigt beispielsweise die Temperatur des ersten Fluids, so dehnt sich die im rechten Dehnstoffantrieb 1' befindliche Wachsmischung 10 aus, was zu einer Verschiebung des zugeordneten Kolbens 11 sowie der Stützplatte 4 führt. Bleibt hingegen die Temperatur des zweiten Fluids außerhalb des Durchlasses unverändert, so bewirkt die Verschiebung der rechten Stützplatte 4 um einen Betrag X eine Längenänderung beider Federelemente um jeweils den Betrag 0,5 · X. Es findet folglich eine Verschiebung des Verstellelementes 3 um diesen Betrag 0,5 · X statt. Wie gefordert, bewirkt somit eine Änderung der Temperatur nur eines Fluids d.h. eine Änderung der Temperaturdifferenz, eine Stellbewegung des Verstellelements 3.

Findet demgegenüber eine gleichgerichtete und betraglich gleiche Änderung der Temperaturen beider Fluide statt, so kommt es aufgrund der entgegengesetzten, jedoch betraglich identischen Kolbenverlagerungen zu einer gleichmäßigen Längenveränderung beider Federelemente 2, so daß das Verstellelement 3 in der ursprünglichen Position verbleibt. Dies ist auch erwünscht, da eine Stellbewegung nur im Falle einer sich ändernden Temperaturdifferenz erfolgen soll.

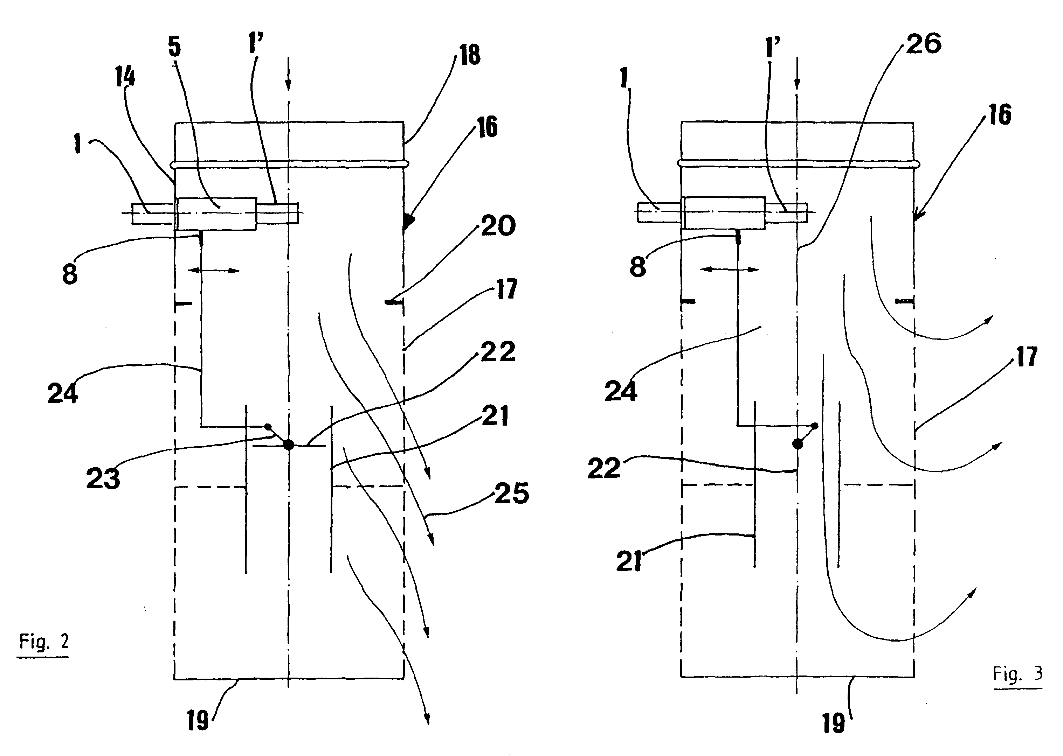

Aus Figur 2 ist zu erkennen, wie die nunmehr verkleinert und schematisch dargestellte Verstelleinrichtung in die Wandung 14 eines Veidrängungsluftauslasses 16 eingebaut ist. Ein derartiger Verdrängungsluftdurchlaß 16 ist in der Regel mit einem Abstand von ca. 3 m über einem Fußboden installiert und besteht aus einem Lochblechmantel 17, einem Anschlußstutzen 18 und einem dem Anschlußstutzen 18 gegenüberliegenden, geschlossenen Boden 19. Im Inneren des Lochblechmantels 17 befinden sich Blendenringe 20, von denen der Übersichtlichkeit halber nur einer abgebildet ist. Im Inneren des Lochblechmantels 17 befindet sich des weiteren ein in axialer Richtung durchströmbares Rohr 21, das mit Hilfe einer drehbeweglichen Klappe 22 im wesentlichen vollständig verschießbar ist. Die Klappe 22 ist mit einem Hebel 23 versehen, der über ein Gestänge 24 mit dem Mitnehmer 8 des nunmehr nicht sichtbaren Verstellelements verbunden ist.

In Figur 2 sind durch Pfeile 25 die Strömungsverhältnisse im Heizfall veranschaulicht, bei dem aufgrund des versperrten Rohres 21 die Strömung um dieses herumgeführt wird und den Lochblechmantel 17 im wesentlichen senkrecht nach unten verläßt. Die mit einer Übertemperatur in den Raum eintretende Zuluft kann aufgrund dieser Strömungscharakteristik bis in Bereiche des Bodens des Raumes vordringen.

Da der rechte Dehnstoffantrieb 1' in der warmen Zuluft, der linke Dehnstoffantrieb 1 jedoch in der vergleichsweise kalten Raumluft angeordnet ist, ist das Verstellelement in dem Rohr 5, d.h. auch der damit verbundene Mitnehmer 8, von einer Mittelstellung aus nach links ausgelenkt, da die im rechten Dehnstoffantrieb 1' befindliche Wachsmischung ein sehr viel größeres Volumen einnimmt als die im linken Dehnstoffantrieb 1 befindliche Wachsmischung.

In Figur 3 ist demgegenüber für denselben Verdrängungsluftdurchlaß 16 der Kühlfall dargestellt. Da nun eine umgekehrte Temperaturdifferenz zwischen der Zuluft und der Raumluft, d.h. auch zwischen den Dehnstoffantrieben 1 und 1', besteht, befinden sich der Mitnehmer 8 und das Gestänge 24 in einer nach rechts verschobenen Position, wodurch die Klappe 22 eine mit der Mittelachse 26 des Verdrängungsluftdurchlasses 16 fluchtende Stellung einnimmt. Das Rohr 21 steht nun nahezu mit seinem vollständigen Querschnitt für die Durchströmung zur Verfügung, so daß aufgrund des geschlossenen Bodens 19 dort eine Umlenkung der zentralen Zuluftströmung stattfindet. Daraus resultiert eine im wesentlichen schräg nach oben gerichtete Ausströmung der Zuluft aus dem Lochblechmantel 17. Die Zuluft verteilt sich daher gleichmäßig um den Verdrängungsluftdurchlaß 16 und sinkt aufgrund ihrer größeren Dichte großflächig und mit niedriger Geschwindigkeit in tiefere Bereiche des Raumes ab.

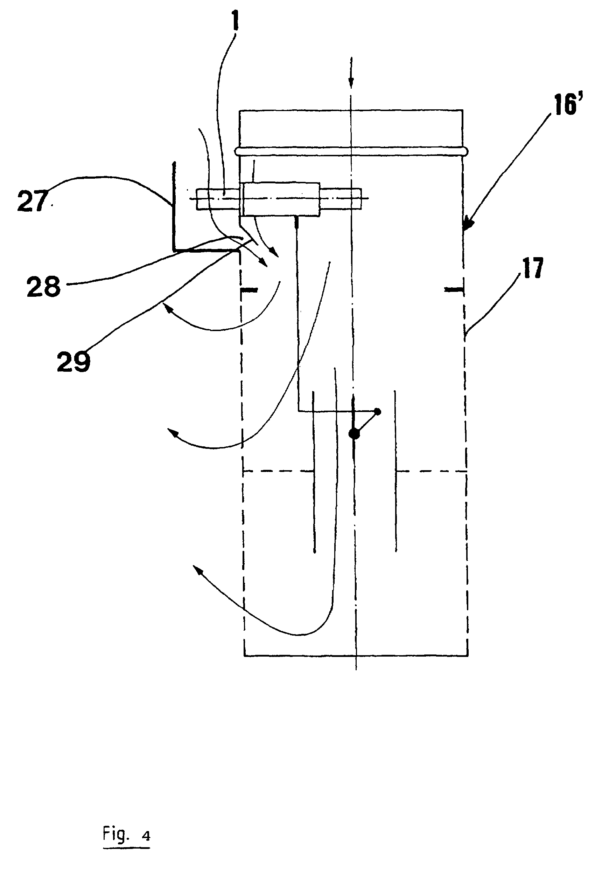

Bei dem in Figur 4 dargestellten Verdrängungsluftdurchlaß 16' ist der außerhalb des Gehäuses befindliche Dehnstoffantrieb 1 von einer Abdeckhaube 27 von der aus dem Lochblechmantel 17 im dargestellten Kühlfall austretenden kalten Zuluft abgeschirmt. Fehlmessungen im Hinblick auf die tatsächlich vorherrschende Raumtemperatur werden hierdurch vermieden. Des weiteren befindet sich unterhalb des Dehnstoffantriebs 1 ein Sekundärfluideinlaß 28, durch den Raumluft, die zuvor an dem Dehnstoffantrieb 1 vorbeigeströmt ist, in das Innere des Verdrängungsluftdurchlasses 16' einströmen kann. Diese Luftströmung wird durch eine im Inneren befindliche Leiteinrichtung 29 hervorgerufen bzw. verstärkt, da hierdurch ein Unterdruckbereich ausgebildet wird, der zu einem Ansaugen von Raumluft und den Sekundärfluideinlaß führt. Die Umströmung des Dehnstoffantriebs 1 bewirkt eine Verkürzung der Ansprechzeit der Verstelleinrichtung.

Eine alternative Verstelleinrichtung gemäß Anspruch 3 besteht aus zwei auf einer gemeinsamen Trägerplatte befestigten Dehnstoffantrieben, jeweils einschließlich der Kolben, der Kolbenstangen und der Stützplatten. Des weiteren weist die Verstelleinrichtung zwei Federelemente auf, die sich jeweils nach unten auf Stützplatten abstützen.

Die Stützplatten sind gelenkig mit einem um eine Drehachse schwenkbar gelagerten Balken verbunden, der an einem Ende gelenkig mit einer Schubstange eines Leitelements zur Verstellung der Ausblascharakteristik eines Deckendrallauslasses verbunden ist. Die von den Temperaturdifferenzen beeinflußte Verstelleinrichtung ist im Vergleich zu dem Deckendrallauslaß drastisch vergrößert dargestellt, um deren Funktionsprinzip anschaulicher erläutern zu können. In Wirklichkeit ist die Verstelleinrichtung in einer Aussparung in einer Wandung des Deckendrallauslasses angeordnet.

Die durchgezogen dargestellte Stellung des Balkens veranschaulicht den Kühlfall, bei dem die Leiteinrichtung bündig mit einem unteren Rand des Deckendralldurchlasses abschließt und daher eine im wesentlichen horizontale Luftausströmung bewirkt. Die das Innere des Deckendrallauslasses durchströmende Zuluft, die den Dehnstoffantrieb beaufschlagt, ist in diesem Fall deutlich kühler als die Raumluft, die den Dehnstoffantrieb umgibt. Daher weist der Kolben des linken Dehnstoffantriebs einen größeren Hub als der Kolben des rechten Dehnstoffantriebs auf, weshalb der Balken eine ansteigende Winkellage einnimmt. Die Federelemente, die eine identische Federkonstante besitzen, weisen dabei dieselbe Verkürzung auf, woraus gleiche Federkräfte und in Verbindung mit den identischen Hebelarmen betragsmäßig gleiche, aber entgegengesetzte Momente um die Drehachse entstehen.

Soll nun ausgehend von einer unveränderten Temperatur der Raumluft der Raum durch Zuführung warmer Luft beheizt werden, so führt die Beaufschlagung des einen Dehnstoffantriebs mit der Warmluft zu einer Ausdehnung der Wachsmasse, was wiederum zu einer Verlagerung des Kolbens und der Stützplatte führt. Die Verkürzung dieses Federelements führt dabei zu einer ebenso großen Verkürzung des anderen Federelements, wodurch eine Drehung des Balkens erfolgt. Die Schubstange und das Leitelement werden hierdurch nach unten verschoben. Wie im Heizfall bei einem Deckendrallauslaß erforderlich, stellt sich hierdurch ein Strömungsbild mit einem vergleichsweise steil nach unten gerichteten Austritt der Zuluft ein.

## Patentansprüche

1. Verstelleinrichtung zum Verändern des Querschnittes eines Fluiddurchlasses und/oder der Richtung eines Fluidstromes in Abhängigkeit von der Temperaturdifferenz zwischen einem ersten Fluid und einem zweiten Fluid, welche aus demselben Stoff oder jeweils aus einem anderen Stoff oder Stoffgemisch bestehen, wobei die Verstelleinrichtung einen ersten vom ersten Fluid beaufschlagten Dehnstoffantrieb (1') und einen zweiten vom zweiten Fluid beaufschlagten Dehnstoffantrieb (1) aufweist, die beide in Wirkverbindung mit einem gemeinsamen Verstellelement (3) stehen, das durch die in entgegengesetzte Richtungen wirkenden Dehnstoffantriebe (1, 1') verstellbar und des weiteren mit einem Mittel zum Verändern des Querschnitts des Fluiddurchlasses und/oder der Richtung des Fluidstromes verbindbar ist, **dadurch gekennzeichnet, daß** das Verstellelement (3) linear verschiebbar ist, wobei beidseitig des Verstellelements (3) jeweils zwischen diesem und einem parallel zu dem Verstellelement (3) verschiebbaren Kolben (11) des jeweils zugeordneten Dehnstoffantriebs (1, 1') je ein in Bewegungsrichtung des Verstellelements (3) und des Kolbens (11) verkürzbares Federelement (2) angeordnet ist.

2. Verstelleinrichtung nach Anspruch 1, **dadurch gekennzeichnet, daß** die Federelemente (2) und das Verstellelement (3) in einem gemeinsamen Rohr (5) verschiebbar sind, das im Verstellbereich des Verstellelements (3) mit einem Langloch (8) zur Durchführung eines fest mit dem Verstellelement (3) verbundenen Mitnehmers versehen ist.

3. Verstelleinrichtung zum Verändern des Querschnittes eines Fluiddurchlasses und/oder der Richtung eines Fluidstromes in Abhängigkeit von der Temperaturdifferenz zwischen einem ersten Fluid und einem zweiten Fluid, welche aus demselben Stoff oder jeweils aus einem anderen Stoff oder Stoffgemisch bestehen, wobei die Verstelleinrichtung einen ersten vom ersten Fluid beaufschlagten Dehnstoffantrieb und einen zweiten vom zweiten Fluid beaufschlagten Dehnstoffantrieb aufweist, die beide in Wirkverbindung mit einem gemeinsamen Verstellelement stehen, das durch die in entgegengesetzte Richtungen wirkenden Dehnstoffantriebe verstellbar und des weiteren mit einem Mittel zum Verändern des Querschnitts des Fluiddurchlasses und/oder der Richtung des Fluidstromes verbindbar ist, **dadurch gekennzeichnet, daß** das einen Balken bildende Verstellelement drehbeweglich gelagert ist, wobei mittels der Debnstoffantriebe jeweils über in Bewegungsrichtung ihrer Kolben verkürzbare Federelemente in bezug auf die Drehachse des Balkens Momente unterschiedlichen Vorzeichens in den Balken einleitbar sind.

4. Verstelleinrichtung nach Anspruch 3, **dadurch gekennzeichnet, daß** die die Momente verursachenden Kräfte der Federelemente, die durch die Dehnstoffantriebe in ihrer Länge veränderbar sind, in bezug auf die Drehachse an gegenüberliegenden Seiten des Balkens angreifen.

5. Verstelleinrichtung nach einem der Ansprüche 1 bis 4, **dadurch gekennzeichnet, daß** diese derart in eine angepaßte Aussparung (13) in einer Wandung (14) eines Durchlasses (16) einsetzbar ist, daß sich der erste Dehnstoffantrieb (1') im Inneren des Durchlasses (16) im Strömungsbereich des ersten Fluids und der zweite Dehnstoffantrieb (1) auβerhalb des Durchlasses (16) im zweiten Fluid befindet.

6. Verstelleinrichtung nach Anspruch 5, **dadurch gekennzeichnet, daß** der zweite Dehnstoffantrieb (1) mittels einer Abdeckhaube (27) von dem aus dem Durchlaß (16) austretenden ersten Fluid abschirmbar ist.

7. Verstelleinrichtung nach Anspruch 6, **dadurch gekennzeichnet, daß** der zweite Dehnstoffantrieb (1) von dem zweiten Fluid umströmbar ist, wozu letzteres aus der Umgebung des Durchlasses (16) durch einen Sekundärfluidauslaß (28) mit Hilfe der Strömung des ersten Fluids im Inneren des Durchlasses (16) in diesen ansaugbar ist.

## Claims

1. Actuating device for changing the cross-sectional area of a fluid channel and/or the direction of a fluid flow in dependence on the temperature difference between a first fluid and a second fluid, said fluids consisting of the same substance or each consisting of a different substance or mixture of substances, said actuating device having a first expanding-material drive (1') impinged upon by the first fluid and a second expanding-material drive (1) impinged upon by the second fluid, the two drives being effectively connected to a common actuating element (3) which is displaceable by the expanding-material drives (1, 1') acting in opposite directions, and is further connectable to means for changing the cross-sectional area of the fluid channel and/or the direction of the fluid flow, **characterised in that** the actuating element (3) is linearly displaceable, a spring element (2) being arranged respectively on each side of actuating element (3) between said actuating element (3) and a piston (11) displaceable parallel to actuating element (3) and forming part of the associated respective expanding-material drive (1, 1'), said spring element (2) being shortenable in the direction of motion of actuating element (3) and piston (11).

2. Actuating device according to Claim 1, **characterised in that** spring elements (2) and actuating element (3) are displaceable in a common tube (5) which is provided in the displacement range of actuating element (3) with an elongated aperture (8) allowing a driver rigidly connected to actuating element (3) to pass through said tube (5).

3. Actuating device for changing the cross-sectional area of a fluid channel and/or the direction of a fluid flow in dependence on the temperature difference between a first fluid and a second fluid, said fluids consisting of the same substance or each consisting of a different substance or mixture of substances, said actuating device having a first expanding-material drive impinged upon by the first fluid and a second expanding-material drive impinged upon by the second fluid, the two drives being effectively connected to a common actuating element which is displaceable by the expanding-material drives acting in opposite directions, and is further connectable to means for changing the cross-sectional area of the fluid channel and/or the direction of the fluid flow, **characterised in that** the actuating element forms a beam which is mounted rotatably, turning moments having different preceding signs with respect to the axis of rotation of the beam being inducible in the beam by means of the expanding-material drives via each of the spring elements shortenable in the direction of motion of their respective pistons.

4. Actuating device according to Claim 3, **characterised in that** the forces of the spring elements which generate the turning moments, the lengths of which springs are variable by the expanding-material drives, act on opposite sides of the beam with respect to its axis of rotation.

5. Actuating device according to one of Claims 1 to 4, **characterised in that** said device is so insertable in an adapted opening (13) in a wall (14) of a channel (16) that the first expanding-material drive (1') is located in the interior of channel (16) in the flow area of the first fluid and the second expanding-material drive (1) is located in the second fluid outside channel (16).

6. Actuating device according to Claim 5, **characterised in that** the second expanding-material drive (1) can be shielded from the first fluid issuing from channel (16) by means of a cowl (27).

7. Actuating device according to Claim 6, **characterised in that** the second fluid can be caused to circulate around the second expanding-material drive (1), said secondary fluid being able to be drawn from the environment of channel (16) through a secondary fluid outlet (28) with the assistance of the flow of the first fluid in the interior of channel (16).

## Revendications

1. Dispositif d'actionnement destiné à modifier la section transversale d'un passage de fluide et/ou le sens d'un courant de fluide en fonction de la différence de température entre un premier fluide et un deuxième fluide, qui sont en la même substance ou respectivement en une autre substance ou mélange de substances, le dispositif d'actionnement comportant un premier entraînement (1') à substance de dilatation soumise au premier fluide et un deuxième entraînement (1) à substance de dilatation soumise au deuxième fluide qui coopèrent tous deux avec un élément (3) commun d'actionnement, qui peut être déplacé par les dispositifs (1, 1') à substance de dilatation agissant en sens opposés et qui peut être relié en outre à un moyen de modification de la section transversale de passage du fluide et/ou du sens du courant de fluide, **caractérisé en ce que** l'élément d'actionnement peut coulisser linéairement, un élément (2) élastique, pouvant se raccourcir dans le sens de déplacement de l'élément (3) d'actionnement et d'un piston (11), étant disposé respectivement de part et d'autre de l'élément (3) d'actionnement respectivement entre celui-ci et le piston (11), coulissant parallèlement à l'élément (3) d'actionnement, de l'entraînement (1, 1') à substance de dilatation respectivement associé.

2. Dispositif d'actionnement suivant la revendication 1, **caractérisé en ce que** les éléments (2) élastiques et l'élément (3) d'actionnement peuvent coulisser dans un tube (5) commun qui est muni dans la zone d'actionnement de l'élément (3) d'actionnement d'une boutonnière (8) pour le passage d'un toc d'entraînement relié rigidement à l'élément (3) d'actionnement.

3. Dispositif d'actionnement destiné à modifier la section transversale d'un passage de fluide et/ou le sens d'un courant de fluide en fonction de la différence de température entre un premier fluide et un deuxième fluide, qui sont en la même substance ou respectivement en une autre substance ou mélange de substances, le dispositif d'actionnement comportant un premier entraînement à substance de dilatation soumise au premier fluide et un deuxième entraînement à substance de dilatation soumise au deuxième fluide qui coopèrent tous deux avec un élément commun d'actionnement, qui peut être déplacé par les dispositifs à substance de dilatation agissant en sens opposés et qui peut être relié en outre à un moyen de modification de la section transversale de passage du fluide et/ou du sens du courant de fluide, **caractérisé en ce que** l'élément d'actionnement formant une barre est monté mobile en rotation, des couples d'entraînement de sens différent par rapport à l'axe de rotation de la barre, pouvant être appliqués respectivement à la barre au moyen des entraînements à substance de dilatation respectivement par des éléments élastiques pouvant être raccourcis dans le sens de déplacement de leur piston.

4. Dispositif d'actionnement suivant la revendication 3, **caractérisé en ce que** les forces, donnant lieu aux couples, des éléments élastiques, dont les longueurs peuvent être modifiées par les entraînements à substance de dilatation, attaquent des côtés de la barre qui sont opposés par rapport à l'axe de rotation.

5. Dispositif d'actionnement suivant l'une des revendications 1 à 4, **caractérisé en ce qu'**il peut être inséré dans un évidement (13) adapté d'une paroi (14) d'un passage (16), de façon que le premier entraînement (1') à substance de dilatation se trouve à l'intérieur du passage (16) dans la zone d'écoulement du premier fluide et que le deuxième entraînement (1) à substance de dilatation se trouve à l'extérieur du passage (16) dans le deuxième fluide.

6. Dispositif d'actionnement suivant la revendication 5, **caractérisé en ce que** le deuxième entraînement (1) à substance de dilatation peut être protégé au moyen d'une hotte (27) du premier fluide sortant du passage (16).

7. Dispositif d'actionnement suivant la revendication 6, **caractérisé en ce que** le deuxième entraînement (1) à substance de dilatation peut être contourné par le deuxième fluide, ce dernier pouvant être aspiré dans le passage (16) alors qu'il est autour du passage (16) par une sortie pour du fluide secondaire à l'aide de l'écoulement du premier fluide à l'intérieur du passage (16).
